# EUROPEAN PATENT SPECIFICATION

(11) **EP 2 789 770 B1**
(45) Date of publication and mention of the grant of the patent: **16.11.2016**
(21) Application number: 13163149.1
(22) Date of filing: 10.04.2013
(51) Int. Cl.: B66C 23/697, E21D 11/10, F16C 3/035, F16C 29/02

(54) **Slide bearing for telescopic booms, in particular for shotcrete manipulators or robots**
Gleitlager für Teleskopausleger, insbesondere für Spritzbetonhandhabungsmittel oder -roboter
Elément de glissement pour flèches télescopiques, en particulier pour robots ou manipulateurs de béton projeté

(43) Date of publication of application: 15.10.2014
(73) Proprietor: Atlas Copco Rock Drills AB, 701 91 Örebro (SE)
(72) Inventor: Hofer, Stefan, 8352 Elsau (CH); Rauber, Tobias, 8135 Langnau am Albis (CH); Truninger, Markus, 8526 Oberneunforn (CH)
(74) Representative: Strobel, Wolfgang

(56) References cited:
- EP-A1- 1 243 706
- DE-A1- 4 322 686
- US-A- 4 264 265

## Description

The present invention relates to a slide bearing for telescopic booms, which are extendable and retractable under load and which comprise a plurality of arm sections being movable with respect to each other. The present invention relates in particular to a slide bearing for telescopic booms or arms which are used for shotcrete manipulators or robots.

Shotcrete manipulators or robots comprise a spraying boom comprising a telescopic structure to adapt the spraying nozzle to the local area where the shotcrete should be sprayed. The distance of the spraying nozzle from the area the shotcrete should be sprayed on should be in a range of 0.8 to 1.5 m. In use, there is a constant movement of the arm sections of the telescopic arm to bring the spray nozzle into the distance range for spraying.

The bearings for the arm sections of the telescopic arm conventionally are slide bearings comprising slide plates. These slide plates suffer enormous wear and tear caused by contamination with sticky shotcrete on exposed areas. US 4,264,265 for example discloses a telescopic boom with slide bearings, wherein the slide plate of the bearing is biased towards an adjacent boom section by means of a piston arranged within the housing of the bearing and by biasing means in form of a belleville spring. As the slide surface of the slide plate begins to wear, the biasing means will force the slide surface into contact with the surface of the adjacent boom section.

Furthermore, because of manufacturing tolerances resulting in an air gap between the slide plate and the sliding surface there is a backlash leading to uncontrollable movement of the spray nozzle resulting also from high torques occurring during movement of the spray nozzle. Such air gaps give chances that sprayed shotcrete entries between the slide plates and surfaces leading to failure of the slide bearing after short time.

Accordingly, it is an object of the present invention to overcome the above-identified drawbacks and to provide a slide bearing for telescopic arms which resists against wear and tear over a long time and avoids unexpected and uncontrolled movement of the spray nozzle during operation.

This object is achieved by the features of claim 1. Preferred embodiments of the present invention are subject of dependent claims 2 to 11.

It is a further object to provide a telescopic boom or arm comprising a plurality of boom or arm sections being moveable without backlash.

This object is achieved by the features of claim 12.

Furthermore, it is an object of the present invention to provide a shotcrete manipulator or robot overcoming the above-identified drawbacks.

This object is achieved by the features of claim 15.

According to the present invention the slide bearing comprises a first section in form of a housing, comprising a central recess, being adapted to receive a second and a third section, a second section being received in said central recess of said first housing section, and a third section, being smoothly in contact with said second section and comprising a sliding surface, said third section serving as slide plate of the slide bearing (27).

According to the present invention, said second section comprises a central inner recess opening to the bottom of the central recess of the first section and extending into said second section until a base section thereof. Furthermore, said second section is configured such that it provides a load deflection curve starting from a rather flat part and turning into and ending in a very steep part.

Due to this configuration of the slide bearings, the slide bearings can be incorporated into the boom sections of the telescopic booms under preload avoiding any air gap between the slide plate and the sliding surface resulting in longer life time of the slide plates as entrance of sticky shotcrete between the slide plates and the sliding surfaces of the boom sections is drastically reduced or even avoided.

The slide bearings of the present invention provide also the advantage that local overload of slide plates as a consequence of non-given parallelism of slide plates and sliding surface, causing deformation or damage of the slide plates and faster wear and tear is avoided. In fact, the sliding plates of the sliding bearings of the present invention are able to spherically adapt to the sliding surface of the corresponding boom section in order to distribute the load homogenously. In other words, free movement of the slide plate to essentially adapt its sliding surface to the opposing surface of the inner wall of the corresponding boom section is achieved. Therefore, an uneven load distribution resulting in load peaks above the permissible limits and the mechanical damage caused therefrom is also avoided.

According to the present invention, the second section of the slide bearing is configured such that it provides a load deflection curve which essentially shows an exponential increase.

In one preferred embodiment, said inner recess of said second section comprises an essentially curved shape, in particular a semi-spherical shape.

In another preferred embodiment of the present invention said central inner recess of said second section is step-shaped with an inner smaller and an outer greater cross-section, so that said second section is configured such that it provides three load deflection curve parts, said rather flat one being provided by the outer greater step section, a steeper one being provided by the inner step section and said very steep one being provided by the base section of said second section.

In total, the slide bearing of the present invention according to this configuration provides the following elastic properties of a damped slide plate:
- Occurrence of an air gap due to deformation or wear is prevented due to the flat load deflection curve or spring characteristics;
- manufacturing tolerances of guided telescopic arm sections are compensated due to the steeper load deflection curve or spring characteristic;
- mechanical impacts are blocked and damped according to the very steep load deflection curve of the third section with respect to the load deflection curve of the second section.

Advantageously, the second section of the slide bearing of the present invention is formed of the elastomer material, in particular of Elastomer NBR 70.

Furthermore, the third section forming the slide plate is formed of a polyamide material, in particular, of PA 6 G Mo material.

According to a further aspect of the present invention, the first, second and third sections are of cylindrical shape. Due to this configuration, the slide bearing can be incorporated in drilled openings of the arm sections of the telescopic arm.

Advantageously, the first section comprises an external thread extending at least partially along the outer circumference of the first section. Accordingly, the slide bearing of the present invention can be screwed into a respective threaded bore or opening in the wall of the boom or arm section of the telescopic boom or arm and can be easily adapted to provide the correct placement with respect to the sliding surface of the moveable arm section. Furthermore, easy readjustment or exchange of worn slide plates is also achieved.

Further advantages are provided when said first section comprising a base section in which a plurality of recesses extend from the side opposite to the side of the central recess of the first section, said recesses being provided under even distance around the circumference of the base section and are able to receive a respective mounting tool. Such a mounting tool may comprise a plurality of pins fitting into the recesses of the first section to turn the first section for mounting, readjustment or exchange purposes of the slide bearing and/or worn parts thereof.

Advantageously, there is provided a plurality of flat sections at the outer circumference of the base section of the first section to cooperate with at least one security means against rotary movement of the first section, said flat sections are provided adjacent to the corresponding recess in the base section of the first section. Contact of security means on at least one flat section provides security of the adjusted slide bearing position in the respective arm section of the telescopic arm.

According to the present invention, the slide surface of the third section comprises a sharp edge providing a wiping effect when coming in contact with dirt, shotcrete, etc. despite all precautions.

The present invention is also directed to a telescopic boom or arm comprising a plurality of boom or arm sections being moveable with respect to each other, which are able to extend or retract under load. It should be noted that telescopic booms or arms of truck mounted cranes are not able to extend or retract under load but are fixed in there position when in operation. The arm sections of the telescopic arm of the present invention comprise said slide bearings of the present invention.

Furthermore, the boom or arm sections of the present invention comprise a polygonal, in particular a hexagonal or octagonal cross section, each boom or arm section comprising two tapering upper and lower wall sections in which the slide bearings are positioned or cooperate with opposite slide surfaces, respectively. With this positioning a very stable configuration of the boom or arm sections to each other is achieved.

With advantage and according to the present invention, the slide bearings are mounted under preload against the corresponding sliding surfaces of the respective boom or arm sections. Accordingly, contact between the slide plate and the corresponding sliding surface is maintained at all operational conditions, so that any dirt is prevented from entering between the slide plate and the sliding surface.

Finally, the present invention relates to a shotcrete manipulator or robot, comprising a bearing and fixing unit of a telescopic boom or arm and a shotcrete nozzle device, which is provided at one end of the telescopic boom or arm, said telescopic boom or arm is configured according to anyone of the claims 12 to 14.

Further features, details and advantages of the present invention are described in the following description making reference to the enclosed drawings, in which:
- Fig. 1: is a perspective view of a first embodiment of a shotcrete manipulator or robot according to the present invention in a first, expanded position;
- Fig. 2: shows the shotcrete manipulator or robot of Fig. 1 in a second more expanded position as in Fig. 1;
- Figs. 3a to 3c: are schematic views of cross sections of the shotcrete manipulator or robot of Figs. 1 and 2, however not showing the real cross sections with dimensions of the sections with respect to each other;
- Fig. 4: is a perspective view of the slide bearing of the present invention showing the upper side with the slide plate;
- Fig. 5: shows the slide plate of the present invention in perspective view of the bottom part of the slide bearing of Fig. 4;
- Fig. 6: is a perspective view of the slide bearing according to the present invention similar to Fig. 4, however in part cross section;
- Fig. 7: is a cross section of the slide bearing according to the present invention along the line VII-VII of Fig. 6;
- Fig. 8: shows a second embodiment of a shotcrete manipulator or robot in schematic perspective view; and
- Figs. 9a and 9b: show two different schematic cross sections of the shotcrete manipulator of Fig. 8.

Reference is now made to the figures showing two different embodiments of the present invention, however, comprising the identical slide bearing of the present invention. Similar parts shown in the figures are referenced with the same reference numerals. The word "arm" in all combinations should be read as "boom or arm".

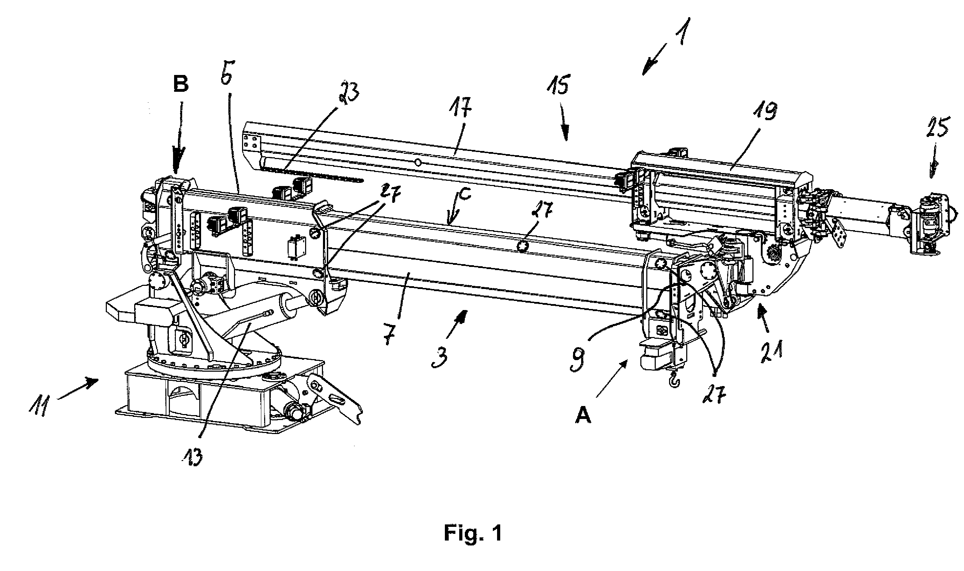

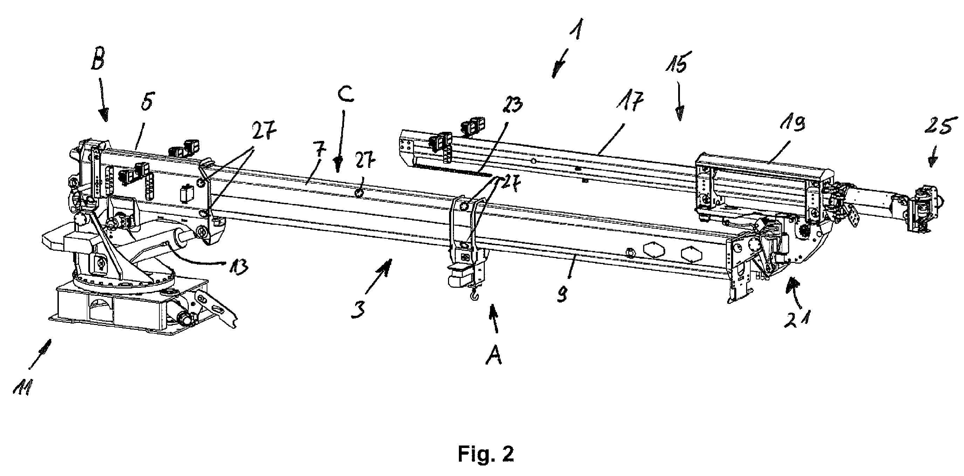

Referring firstly to Figs. 1 and 2, there is shown a shotcrete manipulator or robot 1 comprising a telescopic arm 3 comprising three arm sections 5, 7 and 9, being moveable with respect to each other. The position of the arms 7 and 9 show a first expanded position of the telescopic arm 3, with an expanded arm section 7 and a retracted arm section 9. Arm section 7 can also be moved in a retracted position within arm section 5.

Arm section 5 is supported by a bearing and fixing unit 11, which is of the conventional type and, therefore, a detailed description is omitted. The bearing and fixing unit 11 comprises a hydraulic cylinder 13 with which the arm section 5 can angularly be moved upward and downward.

The forward arm section 9 carries a lance section 15 with a moveable lance 17 mounted in a bearing section 19, which itself is rotateably mounted on a lance carriage section 21 at the front end of the arm section 9 in a conventionally known matter.

Lance 17 is moveable with respect to bearing section 19 and is driven by a driving chain 23, partly shown in Figs. 1 and 2.

At the front end of moveable arm 17 there is provided a shotcrete nozzle 25 distributing the shotcrete to the chosen areas. These areas are for example freshly excavated interior surfaces of tunnels which, after drilling, need to be immediately covered by shotcrete.

To fix the freshly excavated inner surface of the tunnel, shotcrete is applied comprising additives which harden the shotcrete in a very short time. In order to correctly apply the shotcrete to the respective surface, a distance of the shotcrete nozzle 25 from the respective area should be in the range of 0.8 to 1.5 m. Accordingly, in order to cover the inner surface of the excavated tunnel opening the shotcrete nozzle 25 has to follow with above said distance the inner surface of the freshly excavated tunnel. Accordingly, during operation of the shotcrete nozzle 25 arm sections 7 and 9 as well as moveable lance 17 will almost move constantly to bring shotcrete nozzle 25 into the appropriate position.

As can be imagined, there exists high impact on slide bearings known in the prior art due to the heavy load of shotcrete delivered to shotcrete nozzle 25 in particular, when all arm sections 7, 9 are positioned in the most expanded position and lance section 17 in an expanded position is furthermore angularly turned to the left or the right by the lance carriage section 21. The present invention provides a new slide bearing for telescopic arms which meets the specific challenges of such shotcrete manipulators or robots.

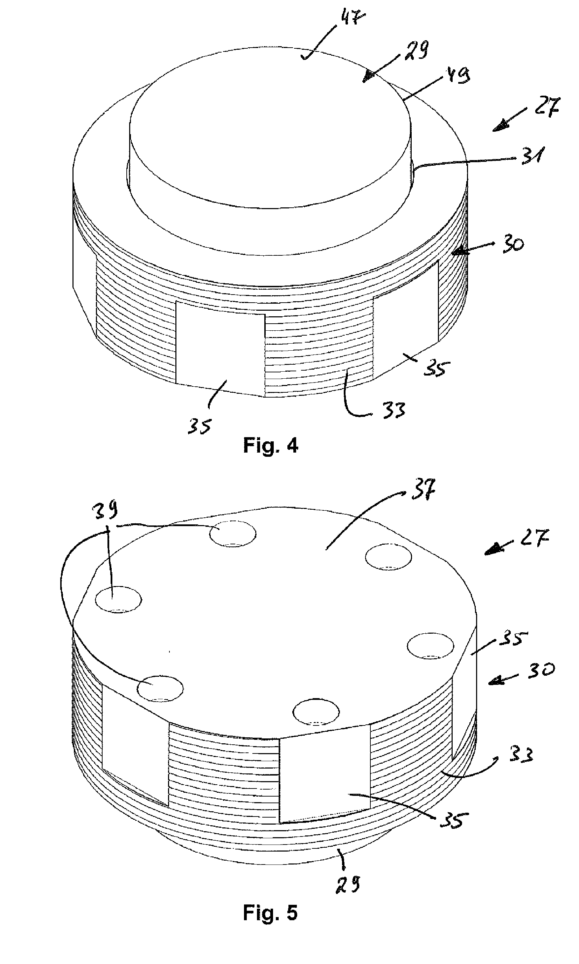

Reference is made to Figs. 4 to 7 showing the slide bearing of the present invention. In Fig. 4 there is shown in perspective view a slide bearing 27 according to the present invention from the side of the slide plate 29. The slide plate 29 forms the third section of the slide bearing 27 and is positioned within a recess 31 of a first section 30 forming a housing of the slide bearing 27.

The first section 30 is preferably made of non-corrosive steel with minimum tensile strength Rm > 500 MPa, in particular steel number 1.404 or alternatively for example 1.4311, 1.4301 or 1.4541.

The first section comprises an external thread 33 and a plurality of flat sections 35 at the outer circumference of the first section 30, which are provided to cooperate with at least one security means (not shown), for example a screw, which is applied in close contact against at least one flat section to provide a safe position of the first section 30 against rotary movement of the first section 30.

In Fig. 5 the slide bearing 27 according to the present invention is shown in perspective view from the opposite side as shown in Fig. 4.

The first section 30 comprises a base section 37 in which a plurality of recesses 39 is provided. These recesses 39 coincide with the flat sections 35 to indicate the user of the inventive slide bearing 27 the position of the flat sections 35 when mounting the slide bearing 27 into respective threaded bores into the arm sections of the shotcrete manipulator or robot.

Recesses 39 serve for connection with a mounting tool (not shown) which is provided with pins to be introduced into recesses 39, so that slide bearing 27 can be turned into respective threaded bores of the arm sections 5, 7 and 9 of the telescopic arm 3 as shown in Figs. 1 and 2.

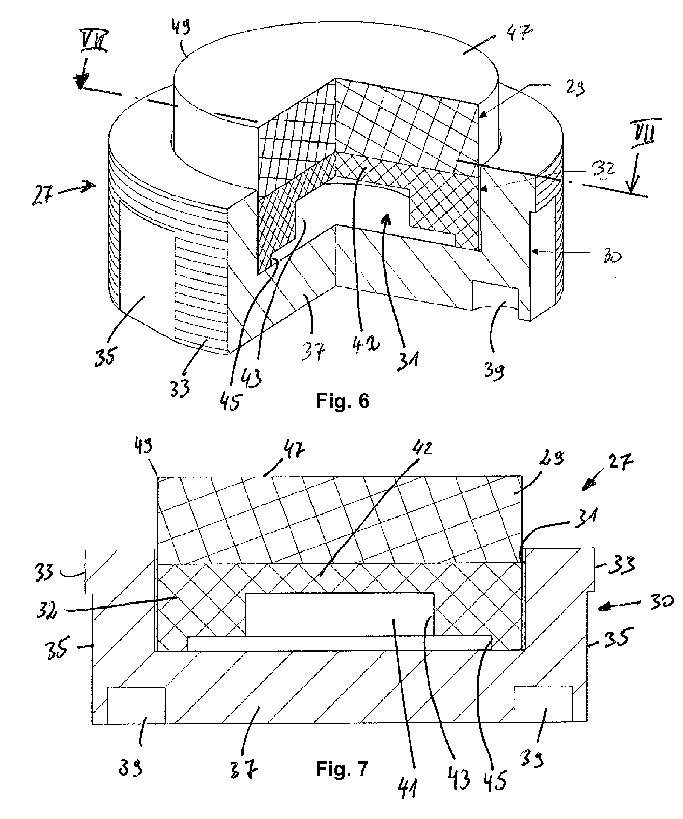

Referring to Figs. 6 and 7, there is shown in part cross section and in full cross section a first alternative embodiment of the slide bearing 27 of the present invention.

Within the recess 31 of the first section 30 there is provided a second section 32 comprising an inner recess 41, which is open to the bottom or base section 37 of the first section 30.

The recess 41 of this embodiment has a step-shaped configuration with an inner smaller recess section 43 and an outer greater recess section 45. Second section 32 is made of elastomer material, in particular of the material Elastomer NBR 70. According to the specific configuration of the second section 32, this second section 32 provides three load deflection curves or spring characteristics: According to the greater recess section 45 the second section 32 provides a flat load deflection curve, which provides the possibility of the slide bearing 27 to adapt to manufacturing tolerances of the telescopic arm sections 5 to 9.

According to the smaller recess section 43 the second section 32 provides a load deflection curve which is steeper than the load deflection curve of greater recess section 45. Accordingly, the second section 32 provides adaptation and in particular compensation of manufacturing tolerances of the arm sections 5 to 9.

Furthermore, the second section 32 comprises a base section 42 being of full cylindrical shape and providing a very steep load deflection curve or spring characteristic to provide a block and a damp against mechanical impact.

Slide plate 29 forms the third section which is preferably formed of a polyamide material, in particular of PA 6 G Mo material.

The third section 29 in form of a slide plate comprises a slide surface 47 with a sharp edge 49 for preventing entry of dirt, in particular sticky shotcrete into the space between the slide surface 47 and the corresponding surface of the arm section of the telescopic arm 3.

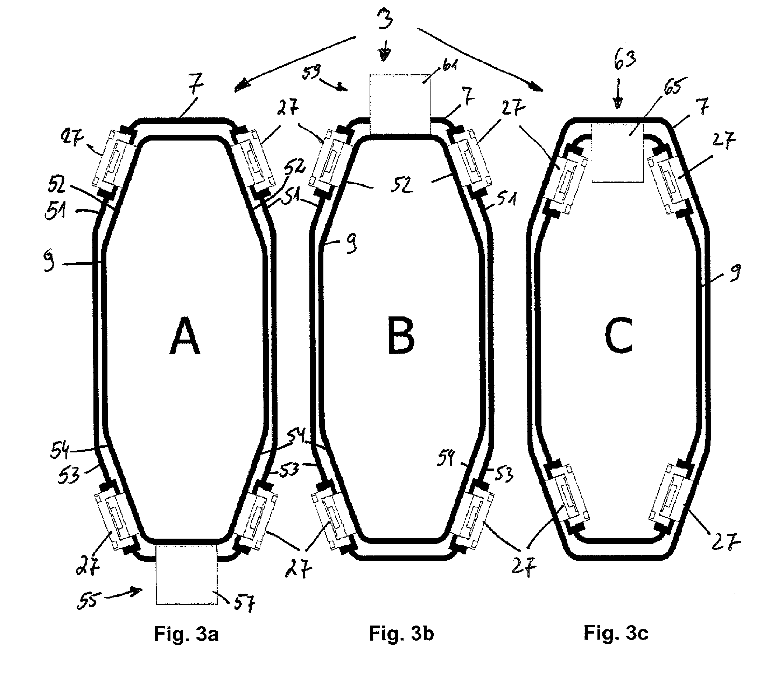

Reference is now made to Figs. 3a to 3c in which schematic views of cross sections of the shotcrete manipulator or robot of Figs. 1 and 2 are shown, however not showing the real cross sections with dimensions of the sections with respect to each other.

In Figs. 3a to 3c three different parts A, B and C of the telescopic arm 3 are shown. Fig. 3a shows the position A indicated in Figs. 1 and 2 showing the slide bearings 27 screwed into the outer arm section 7 to provide the sliding bearing for inner arm section 9. As can be seen from Fig. 3a, the outer arm section comprises upper tapering wall sections 51 in which slide bearings 27 are screwed in and comprises lower tapering wall sections 53 in which slide bearings 27 are screwed in as well. These slide bearings 27 give a contact to corresponding upper wall sections 52 of arm section 9 and lower tapering wall sections 54 of arm section 9. Additionally, a roller 57 is provided forming a roll bearing 55 to support arm section 9 when moving out of arm section 7 and in again. This roller compensates the main forces acting on the bearing position.

Slide bearings 27 are mounted under preload against upper and lower tapering wall sections 52 and 54 leaving no gap between the corresponding sliding surfaces and compensating any manufacturing tolerances of the arm section 7 and 9.

Similarly, Fig 3b shows the position B of Fig. 1 and 2 of the arm sections 7 and 9. A roller bearing 59 is provided at the upper side comprising roller 61 to compensate the main forces due to expanded arm sections 7 and 9 and the movable lance 17.

Fig. 3 shows position C of Fig. 1 and 2, with slide bearings 27 provided at the inner arm 9 to be mounted from the inside and with roller bearing 63 comprising roller 65 below the upper side of the external arm. Roller 65 has the same function as rollers 57 and 61.

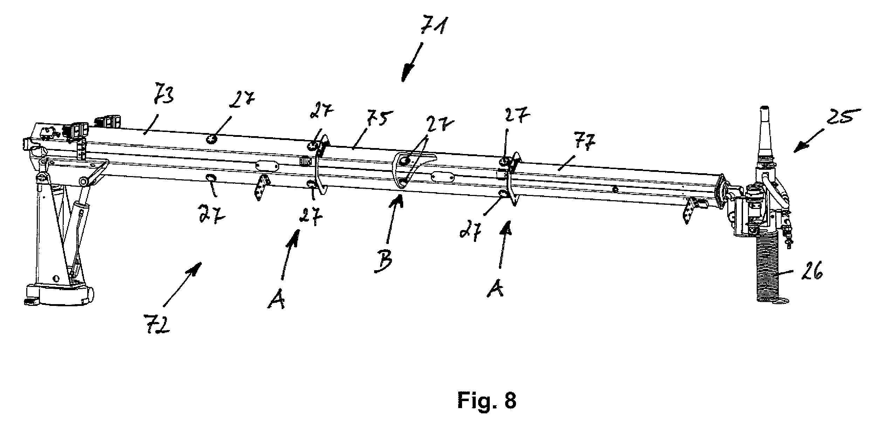

Reference is now made to Fig. 8 showing a second embodiment of a shotcrete manipulator 71 comprising three arm sections 73, 75 and 77 being shown in the expanded position of shotcrete manipulator 71. Arm section 77 supports shotcrete nozzle 25 connected to partly shown shotcrete pipe 26.

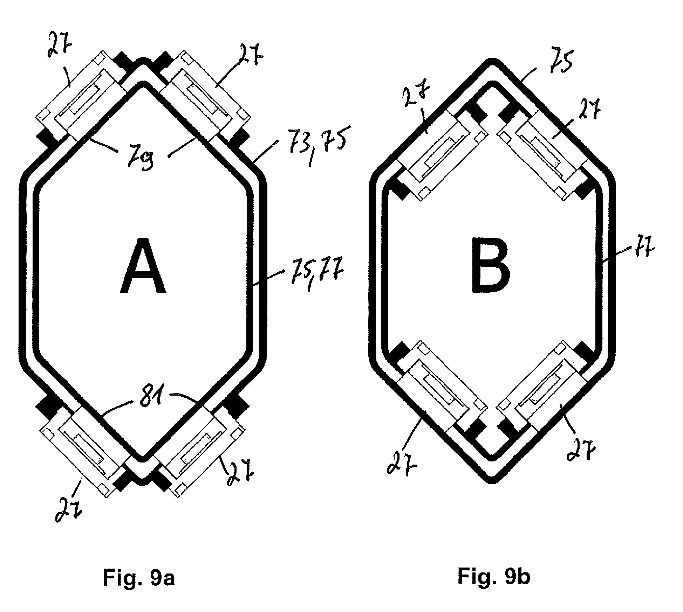

Slide bearings 27 according to the present invention are provided in arm sections 23 and 25 from the outside as shown in Fig. 9a. Slide bearings 27 are mounted under preload against tapering upper wall sections 79 and tapering lower wall sections 81.

Fig. 9b shows position B indicated in Fig. 8 where schematically slide bearings 27 are shown. Slide bearings 27 are mounted from the inside of arm 77 to contact under preload sliding surfaces at the inner wall of arm 75.

With the slide bearing 27 according to the present invention multiple advantages vis-à-vis the prior art obtained. In particular, the enormous wear and tear situation as experienced in the prior art is overcome and a linear guide assistance of the telescopic arms of the present invention provide long life by avoiding any gap between the sliding surfaces and compensation of manufacturing tolerances of the telescopic arm sections. Due to this positive effect, unexpected movement of the shotcrete nozzle due to applied torques are avoided leading to an excellent location of the shotcrete nozzle vis-à-vis the sprayed area. According to the present invention, entry of harming dirt, in particular sticky shotcrete is avoided.

Furthermore, a user-friendly exchange of worn slide bearings, in particular from the outside of the arm sections of the telescopic arm is provided leading to shortened maintenance work with respect to prior art shotcrete manipulators.

### List of reference numerals:

- 1 -: shotcrete manipulator or robot
- 3 -: telescopic boom or arm
- 5 -: boom or arm section
- 7 -: boom or arm section
- 9 -: boom or arm section
- 11 -: bearing and fixing unit
- 13 -: hydraulic cylinder
- 15 -: lance section
- 17 -: movable lance
- 19 -: bearing section
- 21 -: lance carriage section
- 23 -: driving chain
- 25 -: shotcrete nozzle
- 27 -: slide bearing
- 29 -: third section = slide plate
- 30 -: first section
- 31 -: central recess
- 32 -: second section
- 33 -: external thread
- 35 -: flat section
- 37 -: base section
- 39 -: recesses
- 41 -: inner recess
- 42 -: base section
- 43 -: smaller recess section
- 45 -: greater recess section
- 47 -: sliding surface
- 49 -: sharp edge
- 51 -: upper tapering wall section
- 52 -: upper tapering wall section
- 53 -: lower tapering wall section
- 54 -: lower tapering wall section
- 55 -: roller bearing
- 57 -: roller
- 59 -: roller bearing
- 61 -: roller
- 63 -: roller bearing
- 65 -: roller
- 71 -: shotcrete manipulator
- 72 -: telescopic boom or arm
- 73 -: boom or arm section
- 75 -: boom or arm section
- 77 -: boom or arm section
- 79 -: upper wall sections
- 81 -: lower wall sections

## Claims

1. A slide bearing (27) for telescopic booms or arms (3, 72) which are extendable and retractable under load and which comprise a plurality of boom or arm sections (5, 7, 9, 73, 75, 77) being movable with respect to each other, wherein said slide bearing (27) comprises:
a first section (30) in form of a housing, comprising a central recess (31), being adapted to receive a second (32) and a third (29) section,
a second section (32) being received in said central recess (31) of said first housing section (30), and
a third section (29) comprising a sliding surface (47), said third section (29) serving as slide plate of the slide bearing (27),
**characterized in that**
said third section (29) is smoothly in contact with said second section (32),
said second section (32) comprises a central inner recess (41) opening to the bottom of the central recess (31) of the first section (30) and extending into said second section (32) until a base section (42) thereof, and
said second section (32) is configured such that it provides a load deflection curve starting from a rather flat part and turning into and ending in a very steep part.

2. The slide bearing according to claim 1, **characterized in that** said load deflection curve essentially shows an exponential increase.

3. The slide bearing according to claim 1 or 2, **characterized in that** said inner recess (41) of said second section (32) comprises an essentially curved shape, in particular a semi-spherical shape.

4. The slide bearing according to claim 1 or 2, **characterized in that** said central inner recess (41) of said second section (32) is step-shaped with an inner smaller (43) and an outer greater cross-section (45) so that said second section (32) is configured such that it provides three load deflection curve parts, said rather flat one being provided by the outer greater step section (45), a steeper one being provided by the inner step section (43) and said very steep one being provided by the base section (42) of said second section (32).

5. The slide bearing according to one of the claims 1 to 4, **characterized in that** said second section (32) is formed of an elastomer material, in particular of the material Elastomer NBR 70.

6. The slide bearing according to one of the claims 1 to 5, **characterized in that** said third section (29) forming the slide plate is formed of a polyamide material, in particular of PA 6 G Mo material.

7. The slide bearing according to one of the claims 1 to 6, **characterized in that** said first, second and third sections (30, 32, 29) are cylindrical.

8. The slide bearing according to claim 7, **characterized in that** said first section (30) comprises an external thread (33) extending at least partially along the height of the outer circumference of the first section (30).

9. The slide bearing according to one of the claims 1 to 8, **characterized in that** said first section (30) comprises a base section (37) in which a plurality of recesses (39) extend from the side opposite to the side of the central recess (31) of said first section, said recesses (39) being provided under even distance around the circumference of the base section (37) and are able to receive a respective mounting tool.

10. The slide bearing according to claim 9, **characterized in that** at the outer circumference of the base section (37) of said first section (30), there is provided a plurality of flat sections (35) to cooperate with at least one security means against rotary movement of the first section (30), said flat sections (35) are provided adjacent to the corresponding recess (39) in the base section of the first section.

11. The slide bearing according to one of the claims 1 to 10, **characterized in that** the sliding surface (47) of said third section (29) comprises a sharp edge (49).

12. A telescopic boom or arm (3, 72) comprising a plurality of boom or arm sections (5, 7, 9, 73, 75, 77) being movable with respect to each other, which are able to extend or retract under load, said arm sections are supported by slide bearings, **characterized in that** said slide bearings (27) are configured according to any one of the claims 1 to 11.

13. The telescopic arm according to claim 12, **characterized in that** said boom or arm sections (5, 7, 9, 73, 75, 77) comprise a polygonal, in particular a hexagonal or octagonal cross-section, each arm section comprising two tapering upper and lower wall sections (51, 52, 53, 54, 79, 81) in which the slide bearings (27) are positioned or cooperate with opposite slide surfaces, respectively.

14. The telescopic arm according to claim 12 or 13, **characterized in that** said slide bearings (27) are mounted under pre-load against the corresponding slide surfaces.

15. A shotcrete manipulator or robot (1, 71) comprising a bearing and fixing unit for a telescopic boom or arm and a shotcrete nozzle device (25), which is provided at one end of the telescopic boom or arm (3, 72), **characterized in that** said telescopic arm is configured according to any one of the claims 12 to 14.

## Patentansprüche

1. Gleitlager (27) für Teleskopausleger oder -arme (3, 72), die unter Last aus- und einfahrbar sind und die eine Mehrzahl von Ausleger- oder Armabschnitten (5, 7, 9, 73, 75, 77) aufweisen, die zueinander bewegbar sind, wobei das Gleitlager (27) umfasst:
einen ersten Abschnitt (30) in Form eines Gehäuses, das eine zentrale Ausnehmung (31) aufweist, die dazu geeignet ist, einen zweiten (32) und einen dritten (29) Abschnitt aufzunehmen,
einen zweiten Abschnitt (32), der in der zentralen Ausnehmung (31) des ersten Gehäuseabschnitts (30) aufgenommen ist, und
einen dritten Abschnitt (29) mit einer Gleitfläche (47), wobei der dritte Abschnitt (29) als Gleitplatte des Gleitlagers (27) dient,
**dadurch gekennzeichnet, dass**
der dritte Abschnitt (29) gleichmäßig mit dem zweiten Abschnitt (32) in Kontakt steht,
der zweite Abschnitt (32) eine zentrale innere Ausnehmung (41) aufweist, die in Richtung des Bodens der zentralen Ausnehmung (31) des ersten Abschnitts (30) geöffnet ist und sich in den zweiten Abschnitt (32) bis zu einem Grundabschnitt (42) desselben erstreckt, und
der zweite Abschnitt (32) derart ausgebildet ist, dass er eine Federkennlinie bereitstellt, die mit einem ziemlich flachen Abschnitt beginnt und in einen sehr steilen Abschnitt übergeht und mit diesem endet.

2. Gleitlager nach Anspruch 1, **dadurch gekennzeichnet, dass** die Federkennlinie einen im Wesentlichen exponentiellen Anstieg aufweist.

3. Gleitlager nach Anspruch 1 oder 2, **dadurch gekennzeichnet, dass** die innere Ausnehmung (41) des zweiten Abschnitts (32) im Wesentlichen eine gekrümmte Form, insbesondere eine halbkugelartige Form aufweist.

4. Gleitlager nach Anspruch 1 oder 2, **dadurch gekennzeichnet, dass** die zentrale innere Ausnehmung (41) des zweiten Abschnitts (32) stufenförmig mit einem inneren kleineren (43) und einem äußeren größeren Querschnitt (45) ausgebildet ist, so dass der zweite Abschnitt (32) derart ausgebildet ist, dass er drei Federkennlinienabschnitte bereitstellt, wobei der ziemlich flache Abschnitt durch den äußeren größeren Stufenabschnitt (45) bereitgestellt wird, ein steilerer Abschnitt durch den inneren Stufenabschnitt (43) bereitgestellt wird, und der sehr steile Abschnitt durch den Grundabschnitt (42) des zweiten Abschnitts (32) bereitgestellt wird.

5. Gleitlager nach einem der Ansprüche 1 bis 4, **dadurch gekennzeichnet, dass** der zweite Abschnitt (32) aus einem Elastomer Material, insbesondere aus dem Material Elastomer NBR 70 gebildet ist.

6. Gleitlager nach einem der Ansprüche 1 bis 5, **dadurch gekennzeichnet, dass** der dritte Abschnitt (29), der die Gleitplatte bildet, aus einem Polyamid Material, insbesondere aus dem Material PA 6 G Mo gebildet ist.

7. Gleitlager nach einem der Ansprüche 1 bis 6, **dadurch gekennzeichnet, dass** der erste, zweite und der dritte Abschnitt (30, 32, 29) zylindrisch ausgebildet sind.

8. Gleitlager nach Anspruch 7, **dadurch gekennzeichnet, dass** der erste Abschnitt (30) ein Außengewinde (33) umfasst, das sich zumindest teilweise entlang der Höhe des äußeren Umfangs des ersten Abschnitts (30) erstreckt.

9. Gleitlager nach einem der Ansprüche 1 bis 8, **dadurch gekennzeichnet, dass** der erste Abschnitt (30) einen Grundabschnitt (37) umfasst, in dem sich eine Mehrzahl von Ausnehmungen (39) von der Seite gegenüber der Seite der zentralen Ausnehmung (31) des ersten Abschnitts erstrecken, wobei die Ausnehmungen (39) in gleichmäßigen Abständen um den Umfang des Grundabschnitts (37) vorgesehen sind und dazu geeignet sind, ein entsprechendes Montagewerkzeug aufzunehmen.

10. Gleitlager nach Anspruch 9, **dadurch gekennzeichnet, dass** an dem äußeren Umfang des Grundabschnitts (37) des ersten Abschnitts (30) eine Mehrzahl von flachen Abschnitten (35) vorgesehen ist, um mit mindestens einem Sicherungsmittel gegen Drehbewegung des ersten Abschnitts (30) zusammenzuwirken, wobei die flachen Abschnitte (35) neben der entsprechenden Ausnehmung (39) in dem Grundabschnitt des ersten Abschnitts vorgesehen sind.

11. Gleitlager nach einem der Ansprüche 1 bis 10, **dadurch gekennzeichnet, dass** die Gleitfläche (47) des dritten Abschnitts (29) eine scharfe Kante (49) umfasst.

12. Teleskopausleger oder -arm (3, 72) mit einer Mehrzahl von Ausleger- oder Armabschnitten (5, 7, 9, 73, 75, 77), die zueinander bewegbar sind und die dazu geeignet sind, unter Last auszufahren oder einzufahren, wobei die Armabschnitte durch Gleitlager gelagert sind, **dadurch gekennzeichnet, dass** die Gleitlager (27) nach einem der Ansprüche 1 bis 11 ausgebildet sind.

13. Teleskoparm nach Anspruch 12, **dadurch gekennzeichnet, dass** die Ausleger- oder Armabschnitte (5, 7, 9, 73, 75, 77) einen polygonalen, insbesondere einen hexagonalen oder oktagonalen Querschnitt aufweisen, wobei jeder Armabschnitt zwei abgeschrägte obere und untere Wandabschnitte (51, 52, 53, 54, 79, 81) umfasst, in denen jeweils die Gleitlager (27) angeordnet sind oder mit gegenüberliegenden Gleitflächen zusammenwirken.

14. Teleskoparm nach Anspruch 12 oder 13, **dadurch gekennzeichnet, dass** die Gleitlager (27) unter Vorspannung gegen die entsprechenden Gleitflächen montiert werden.

15. Spritzbetonhandhabungsmittel oder -roboter (1, 71) mit einer Lagerungs- und einer Befestigungseinrichtung für einen Teleskopausleger oder -arm und einer Spritzbeton-Düsenvorrichtung (25), die an einem Ende des Teleskopauslegers oder -arms (3, 72) vorgesehen ist, **dadurch gekennzeichnet, dass** der Teleskoparm nach einem der Ansprüche 12 bis 14 ausgebildet ist.

## Revendications

1. Palier à glissement (27) pour des flèches ou des bras télescopiques (3, 72) qui sont extensibles et rétractables sous une charge et qui comprennent une pluralité de sections de flèche ou de bras (5, 7, 9, 73, 75, 77) étant mobiles les unes par rapport aux autres, dans lequel ledit palier à glissement (27) comprend :
une première section (30) sous la forme d'un boîtier, comprenant un évidement central (31), étant adaptée pour recevoir une deuxième (32) et une troisième (29) sections,
une deuxième section (32) étant reçue dans ledit évidement central (31) de ladite première section de boîtier (30), et
une troisième section (29) comprenant une surface de glissement (47), ladite troisième section (29) servant de plaque de glissement du palier à glissement (27),
**caractérisé en ce que**
ladite troisième section (29) est en contact de manière lisse avec ladite deuxième section (32),
ladite deuxième section (32) comprend un évidement intérieur central (41) débouchant vers le fond de l'évidement central (31) de la première section (30) et s'étendant dans ladite deuxième section (32) jusqu'à une section de base (42) de celle-ci, et
ladite deuxième section (32) est configurée de telle sorte qu'elle fournit une courbe de déviation de charge commençant à partir d'une section plutôt plate et se transformant en une section très abrupte et se terminant dans celle-ci.

2. Palier à glissement selon la revendication 1, **caractérisé en ce que** ladite courbe de déviation de charge présente essentiellement une augmentation exponentielle.

3. Palier à glissement selon la revendication 1 ou 2, **caractérisé en ce que** ledit évidement intérieur (41) de ladite deuxième section (32) comprend une forme sensiblement courbe, en particulier une forme semi-sphérique.

4. Palier à glissement selon la revendication 1 ou 2, **caractérisé en ce que** ledit évidement intérieur central (41) de ladite deuxième section (32) est en forme de gradin avec une section transversale intérieure plus petite (43) et une section transversale extérieure plus grande (45) de sorte que ladite deuxième section (32) est configurée de telle sorte qu'elle fournit trois sections de courbe de déviation de charge, ladite section plutôt plate étant fournie par la portion de gradin extérieure la plus grande (45), une section plus abrupte étant fournie par la section de gradin intérieure (43) et ladite section très abrupte étant fournie par la section de base (42) de ladite deuxième section (32).

5. Palier à glissement selon l'une des revendications 1 à 4, **caractérisé en ce que** ladite deuxième section (32) est formée d'un matériau élastomère, en particulier du matériau élastomère NBR 70.

6. Palier à glissement selon l'une des revendications 1 à 5, **caractérisé en ce que** ladite troisième section (29) formant la plaque de glissement est formée d'un matériau polyamide, en particulier d'un matériau PA 6 G Mo.

7. Palier à glissement selon l'une des revendications 1 à 6, **caractérisé en ce que** lesdites première, deuxième et troisième sections (30, 32, 29) sont cylindriques.

8. Palier à glissement selon la revendication 7, **caractérisé en ce que** ladite première section (30) comprend un filet externe (33) s'étendant au moins partiellement le long de la hauteur de la circonférence extérieure de la première section (30).

9. Palier à glissement selon l'une des revendications 1 à 8, **caractérisé en ce que** ladite première section (30) comprend une section de base (37) dans laquelle une pluralité d'évidements (39) s'étendent depuis le côté opposé au côté de l'évidement central (31) de ladite première section, lesdits évidements (39) étant agencés sous une distance uniforme autour de la circonférence de la section de base (37) et sont aptes à recevoir un outil de montage respectif.

10. Palier à glissement selon la revendication 9, **caractérisé en ce que** sur la circonférence extérieure de la section de base (37) de ladite première section (30), il est prévu une pluralité de parties plates (35) pour coopérer avec au moins des moyens de sécurité à l'encontre d'un mouvement rotatif de la première section (30), lesdites parties plates (35) sont agencées au voisinage de l'évidement (39) correspondant dans la section de base de la première section.

11. Palier à glissement selon l'une des revendications 1 à 10, **caractérisé en ce que** la surface de glissement (47) de ladite troisième section (29) comprend un bord vif (49).

12. Flèche ou bras télescopique (3, 72) comprenant une pluralité de sections de flèche ou de bras (5, 7, 9, 73, 75, 77) étant mobiles les unes par rapport aux autres, qui sont aptes à s'étendre et de se rétracter sous une charge, lesdites sections de bras sont supportées par des paliers à glissement, **caractérisé en ce que** lesdits paliers à glissement (27) sont configurés selon l'une quelconque des revendications 1 à 11.

13. Bras télescopique selon la revendication 12, **caractérisé en ce que** lesdites sections de flèche ou de bras (5, 7, 9, 73, 75, 77) comprennent une section transversale polygonale, en particulier une section transversale hexagonale ou octogonale, chaque section de bras comprenant deux sections de paroi supérieure et inférieure rétrécies (51, 52, 53, 54, 79, 81) dans lesquelles les paliers à glissement (27) sont positionnés ou coopèrent avec des surfaces de glissement opposées, respectivement.

14. Bras télescopique selon la revendication 12 ou 13, **caractérisé en ce que** lesdits paliers de glissement (27) sont montés sous une pré-charge contre les surfaces de glissement correspondantes.

15. Robot ou manipulateur de béton projeté (1, 71) comprenant un palier et une unité de fixation pour une flèche ou un bras télescopique et un dispositif à buse de béton projeté (25), qui est agencé sur une extrémité de la flèche ou du bras télescopique (3, 72), **caractérisé en ce que** ledit bras télescopique est configuré selon l'une quelconque des revendications 12 à 14.
